(19) Europäisches Patentamt / European Patent Office / Office européen des brevets

(11) **EP 4 336 756 A1**

(12) **EUROPEAN PATENT APPLICATION**

(43) Date of publication:
**13.03.2024 Bulletin 2024/11**

(21) Application number: **23192909.2**

(22) Date of filing: **23.08.2023**

(51) International Patent Classification (IPC):
**H04L 1/00** (2006.01)   **H04B 7/0456** (2017.01)
**H04B 7/06** (2006.01)   **G06N 3/0455** (2023.01)
**G06N 3/08** (2023.01)

(52) Cooperative Patent Classification (CPC):
**H04L 1/0026; H04B 7/0626; H04B 7/0658;**
G06N 3/0455; G06N 3/08; H04B 7/0456

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.08.2022 IN 202221048540**
**02.08.2023 US 202318363963**

(71) Applicant: **Mavenir Systems, Inc.**
**Richardson, TX 75081 (US)**

(72) Inventors:
• **DEMIR, Ali Fatih**
**Allen, Texas, 75013 (US)**
• **NGUYEN, Dang Qua**
**Lawrence, Kansas, 66049 (US)**
• **GOYAL, Vishal**
**324009 Kota, Rajasthan (IN)**
• **SAHIN, Mehmet Mert**
**Tampa, Florida, 33647 (US)**
• **NAM, Young-Han**
**Plano, Texas, 75025 (US)**

(74) Representative: **Studio Torta S.p.A.**
**Via Viotti, 9**
**10121 Torino (IT)**

(54) **SYSTEMS AND METHODS FOR EFFICIENT INFORMATION EXCHANGE BETWEEN UE AND GNB FOR CSI COMPRESSION**

(57) The invention concerns a method comprising: configuring a UE to report information on a plurality of CSI encoders to a gNB for CSI feedback; assigning each of the plurality of CSI encoders with a distinct integer or an encoder index; and configuring the gNB to select a CSI encoder reported by the UE and configure the UE to use the selected CSI encoder by signaling the encoder index or distanced integer assigned to the selected CSI encoder; and select a decoder corresponding to the selected CSI encoder.

FIG. 7

EP 4 336 756 A1

**Description**

*Field of the Disclosure*

The present disclosure relates to systems and methods for radio access networks. The present disclosure is related to the design of operation, administration and management of various network elements of 4G and 5G based mobile networks. The present disclosure relates to CSI enhancements in mobile networks.

Description of the Related Art

5G new radio (NR) is becoming more popular. It has unique features as compared to LTE, of which CSI parameters are the quantities related to the state of a channel which is very important for improving the overall performance of the wireless system.

The current 5G NR specification does not support the use of CSI compression.

**SUMMARY**

Described are systems and methods for CSI feedback through AI/ML-based CSI compression. The CSI compression can be performed through an autoencoder (AE). Considering diverse requirements and capabilities, different autoencoder structures can be selected for CSI compression. In order to make the autoencoder work properly, the decoder input and encoder output dimensions are aligned along with the decoder output and encoder input dimensions. Therefore, the selected autoencoder structure can be exchanged between the UE and gNB.

In an implementation, described is a method comprising:

configuring the UE to report information on a plurality of CSI encoders to a gNB for CSI feedback;
assigning each of the plurality of CSI encoders with a distinct integer or an encoder index; and
configuring the gNB to select a CSI encoder reported by the UE and configure the UE to use the selected CSI encoder by signaling the encoder index or distanced integer assigned to the selected CSI encoder; and
select a decoder corresponding to the selected CSI encoder.

In an implementation, described is an autoencoder, comprising:
a CSI encoder for a UE, the CSI encoder being selected by a gNB from a plurality of CSI encoders, wherein the UE is configured to at least:

report information on the plurality of CSI encoders to a gNB for CSI feedback; and
assign each of the plurality of CSI encoders with a distinct integer or an encoder index; and
a decoder for a gNB corresponding to the selected CSI encoder, wherein the gNB is configured to at least:

select the CSI encoder reported by the UE and configure the UE to use the selected CSI encoder by signaling the encoder index or distanced integer assigned to the selected CSI encoder and

select the decoder corresponding to the selected CSI encoder.

In an implementation, described is a system comprising at least one of the autoencoder implementations described herein. In an implementation, described is a computer program product comprising program instructions for executing at least one of the methods described herein.

In the implementations described herein, the UE can be configured to report to the gNB, for each one of the plurality of CSI encoders, information on: input parameters of the CSI encoder, output parameters of the CSI encoder, and corresponding performance parameters. UE CSI encoder input can comprise $N = 2 \times N_t \times N_{PRB}$ number of real numbers,

a parameter $N_t$ being a number of transmit antenna ports, and
a parameter $N_{PRB}$ being a total number of PRBs corresponding to the bandwidth of an operating bandwidth part (BWP). UE CSI encoder input can comprise $N_t = 2 \times N_1 \times N_2$, where
a parameter $N_1$ being a number of antenna ports in a first direction,
a parameter $N_2$ is a number of antenna ports in a second direction, and,
a scaler 2 in $N_t$ corresponds to a number of antenna polarizations. UE CSI encoder input $N_t$ can be equal to a number of CSI-RS ports.

The encoder can be configured to compress the $N$ real numbers into $M \times B$ (bits); $M$ being a number of quantized symbols for a dimension of a compressed channel data; and $B$ being a number of bits per quantized symbol. The UE can be configured to send information on the encoder output parameters by at least one of: sending values of $M$ and $B$ to the gNB separately; sending the gNB variables derived from $M$ and $B$; or both. The variables derived from $M$ and $B$ can comprise a compression ratio ($N/M$) sent along with $B$. The variables derived from M and B can comprise a total number of feedback bits ($M \times B$) reported along with either $M$ or $B$.

The gNB can be configured to infer that the UE encoder output is $M \times B$ bits, and determine that the gNB decoder input dimension corresponding to the UE encoder is $M$ quantized symbols, wherein each of the M symbols is represented by $B$ bits.

The encoder input parameters and the encoder output parameters can correspond to specific performance for: computational complexity and power consumption, and CSI reconstruction accuracy.

The UE can be configured to send the gNB information on a number of weights used for an encoder neural network as a measure of the computational complexity and power consumption, and information on the GCS as a measure of CSI reconstruction accuracy. The number of weights can depend on a CSI UE encoder architecture. The encoder architecture for determining the number of weights can comprise a number of convolutional layers, a kernel size, or both.

The gNB is configured can be configured to infer that the UE encoder input dimension is $N = 2 \times N_t \times N_{PRB}$, and determine the gNB decoder output dimension corresponding to the UE encoder is $N$ real numbers.

## BRIEF DESCRIPTION OF THE DRAWINGS

Figure 1 shows a high-level block diagram of the auto-encoder for CSI compression.

Figure 2 shows a high-level block diagram of the encoder for CSI compression.

Figure 3 shows a high-level block diagram of the decoder for CSI compression.

Figure 4 shows a scatter plot of intermediate KPI (GCS) vs. eventual KPI (SINR).

Figure 5 is a graph showing SINR performance comparison with AE-based and 5G NR Type I-based precoders.

Figure 6 is a graph showing throughput performance comparison with AE-based and 5G NR Type I-based precoders.

Figure 7 shows a system flow for an exchange between a UE and a gNB to select an autoencoder.

Figure 8 is a block diagram of a system architecture.

## DETAILED DESCRIPTION OF THE IMPLEMENTATIONS

Reference is made to Third Generation Partnership Project (3GPP) and the Internet Engineering Task Force (IETF) in accordance with embodiments of the present disclosure. The present disclosure employs abbreviations, terms and technology defined in accord with Third Generation Partnership Project (3GPP) and/or Internet Engineering Task Force (IETF) technology standards and papers, including the following standards and definitions. 3GPP and IETF technical specifications (TS), standards (including proposed standards), technical reports (TR) and other papers are incorporated by reference in their entirety hereby, define the related terms and architecture reference models that follow.

3GPP TR 38.901 "Study on channel model for frequencies from 0.5 to 100 GHz" v 17.0.0 (March 31, 2022)

*Acronyms*

3GPP: Third generation partnership project

AE: Autoencoder

BS: Base Station

CA: Carrier Aggregation

CAPEX: Capital Expenditure

CBRS: Citizens Broadband Radio Services

CC: Component carrier

COTS: Commercial off-the-shelf

CP: cyclic prefix

C-plane: Control plane

C-RAN: cloud radio access network

CSI: channel state information

CU: Central unit

DCI: downlink control indicator

DL: downlink

DU: Distribution unit

eAxC ID: Extended Antenna-Carrier identifier: a data flow for a single antenna (or spatial stream) for a single carrier in a single sector.

eNB: Evolved Node B (applies to LTE)

FDD: Frequency-division duplex

FEC: forward error correction

FH: Fronthaul

FFT: Fast Fourier Transform

gNB: g NodeB (applies to NR)

iFFT: inverse Fast Fourier Transform

HARQ: hybrid automatic repeat request

LTE: long term evolution

LTE-A: LTE Advanced

M-plane: Management plane

MCS: modulation and coding scheme

MIMO: multiple input, multiple output

MMSE-IRC: Minimum mean square error - interference rejection combining

MMSE-MRC: Minimum mean square error - maximum-ratio combining

mmWave: millimeter wave

MNO: Mobile network operator

NR: New radio

OAM: Operation and management

O-DU: O-RAN Distributed Unit

O-RU: O-RAN Radio Unit

O-RAN: Open RAN (Basic O-RAN specifications are prepared by the O-RAN alliance)

OPEX: Operating Expense

PBCH: Physical Broadcast Channel

PCFICH: Physical Control Format Indicator Channel

PDCCH: Physical downlink Control Channel

PDCP: Packet Data Convergence Protocol

PDSCH: physical downlink shared channel

PHICH: Physical Hybrid ARQ Indicator Channel

PHY: physical layer

LPHY: lower physical layer

UPHY: upper physical layer

PUCCH: Physical Uplink Control Channel

PUSCH: Physical Uplink Shared Channel

QAM: quadrature amplitude modulation

QPSK: Quadrature Phase Shift Keying

RACH: random access channel

PRACH: physical random access channel

RF: radio frequency interface

RLC: Radio Link Control

RRC: Radio Resource Control

RRM: Radio resource management

RRU: Remote radio unit

RU: Radio Unit

RS: reference signal

RSSI: received signal strength indicator

RPC: Remote procedure call

SMO: Service Management and Orchestration

S-plane: Synchronization plane

SCell: Secondary cell

SIMO: single input, multiple output

SINR: signal-to-interference-plus-noise ratio

SRS: Sounding reference signal

SSS: Secondary Synchronization Signal

TB: transport block

TTI: Transmission Time Interval

TDD: Time division duplex

U-plane: User plane

UCI: Uplink Control Information

UE: user equipment

UL: uplink

UL DMRS: uplink demodulation reference signal

ULSCH: Uplink Shared Channel

vBBU: Virtualized baseband unit

VNF: Virtual Network Function

*Definitions*

Channel: the contiguous frequency range between lower and upper frequency limits.
C-plane: Control Plane: refers specifically to real-time control between O-DU and O-RU, and should not be confused with the UE's control plane
DL: DownLink: data flow towards the radiating antenna (generally on the LLS interface)
LLS: Lower Layer Split: logical interface between O-DU and O-RU when using a lower layer (intra-PHY based) functional split.
M-Plane: Management Plane: refers to non-real-time management operations between the O-DU and the O-RU
O-CU: O-RAN Control Unit - a logical node hosting PDCP, RRC, SDAP and other control functions
O-DU: O-RAN Distributed Unit: a logical node hosting RLC/MAC/High-PHY layers based on a lower layer functional split.
O-RU: O-RAN Radio Unit: a logical node hosting Low-PHY layer and RF processing based on a lower layer functional split. This is similar to 3GPP's "TRP" or "RRH" but more specific in including the Low-PHY layer (FFT/iFFT, PRACH extraction).

OTA: Over the Air

S-Plane: Synchronization Plane: refers to traffic between the O-RU or O-DU to a synchronization controller which is generally an IEEE 1588 Grand Master (however, Grand Master functionality may be embedded in the O-DU).

U-Plane: User Plane: refers to IQ sample data transferred between O-DU and O-RU

UL: UpLink: data flow away from the radiating antenna (generally on the LLS interface)

The present disclosure provides embodiments of systems, devices and methods for Radio Access Networks and Cloud Radio Access Networks.

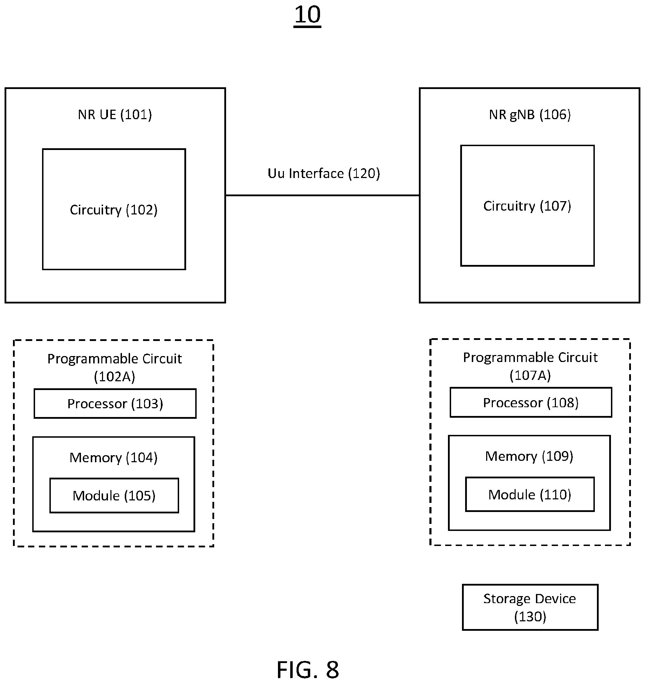

Figure 8 is a block diagram of a system 10 environment implementing CSI compression and implementing an autoencoder structure via an exchange between a UE and a gNB. System 10 includes a NR UE 101, a NR gNB 106. The NR UE and NR gNB are communicatively coupled via a Uu interface 120.

NR UE 101 includes electronic circuitry, namely circuitry 102, that performs operations on behalf of NR UE 101 to execute methods described herein. Circuity 102 may be implemented with any or all of (a) discrete electronic components, (b) firmware, and (c) a programmable circuit 102A.

NR gNB 106 includes electronic circuitry, namely circuitry 107, that performs operations on behalf of NR gNB 106 to execute methods described herein. Circuity 107 may be implemented with any or all of (a) discrete electronic components, (b) firmware, and (c) a programmable circuit 107A.

Programmable circuit 107A, which is an optional implementation of circuitry 107, includes a processor 108 and a memory 109. Processor 108 is an electronic device configured of logic circuitry that responds to and executes instructions. Memory 109 is a tangible, non-transitory, computer-readable storage device encoded with a computer program. In this regard, memory 109 stores data and instructions, i.e., program code, that are readable and executable by processor 108 for controlling operations of processor 108. Memory 109 may be implemented in a random-access memory (RAM), a hard drive, a read only memory (ROM), or a combination thereof. One of the components of memory 109 is a program module, namely module 110. Module 110 contains instructions for controlling processor 108 to execute operations described herein on behalf of NR gNB 106.

The term "module" is used herein to denote a functional operation that may be embodied either as a stand-alone component or as an integrated configuration of a plurality of subordinate components. Thus, each of module 105 and 110 may be implemented as a single module or as a plurality of modules that operate in cooperation with one another.

While modules 110 are indicated as being already loaded into memories 109, and module 110 may be configured on a storage device 130 for subsequent loading into their memories 109. Storage device 130 is a tangible, non-transitory, computer-readable storage device that stores module 110 thereon. Examples of storage device 130 include (a) a compact disk, (b) a magnetic tape, (c) a read only memory, (d) an optical storage medium, (e) a hard drive, (f) a memory unit consisting of multiple parallel hard drives, (g) a universal serial bus (USB) flash drive, (h) a random-access memory, and (i) an electronic storage device coupled to NR gNB 106 via a data communications network.

Uu Interface 120 is the radio link between the NR UE and NR gNB, which is compliant to the 5G NR specification.

Described are systems and methods for CSI feedback through AI/ML-based CSI compression.

Considering diverse requirements and capabilities, different autoencoder structures can be selected for CSI compression. The selected autoencoder structure can be exchanged between the UE and gNB. The UE reports information on multiple CSI encoders to the gNB. The multiple CSI encoders are identified by distinct integer values for indexing. For each CSI encoder, the UE sends information on the encoder input parameters, the encoder output parameters, and the corresponding performance parameters to the gNB. Among the received UE information on the multiple CSI encoders, the gNB selects an encoder and configures the UE to use the selected encoder by signaling the encoder index. Afterward, the gNB selects the decoder according to the encoder selection. The decoder input dimension is aligned with the encoder output dimension. The decoder output dimension is also aligned with the encoder input dimension.

Described are implementations of systems and methods for efficient information exchange between UE and gNB for CSI Compression.

**Part 1: AI/ML Model Description**

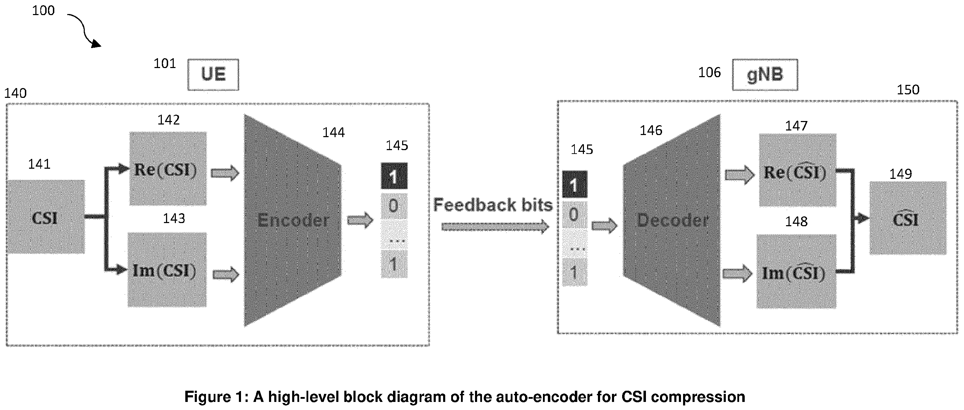

In an AI/ML-based CSI compression module 140, an AI/ML model at the UE 101 compresses CSI 141, and at an AI/ML-based CSI decompression module 150, the AI/ML model at the gNB 106 reconstructs the original CSI using the output 145 of UE's 101 AI model. Therefore, considering this application, an autoencoder 100 is a proper an AI/ML model, and a CSI-Net [2] based autoencoder (AE) model is implemented, as shown in Figure 1.

Considering $N_r$ receive antennas and $N_t$ transmit antennas in a MIMO-OFDM system, the received signal on the UE side at the $k^{th}$ resource block ( $y_k \in \mathbb{C}^{N_r \times 1}$ ) can be modeled as follows:

$$y_k = H_k x_k + n_k$$

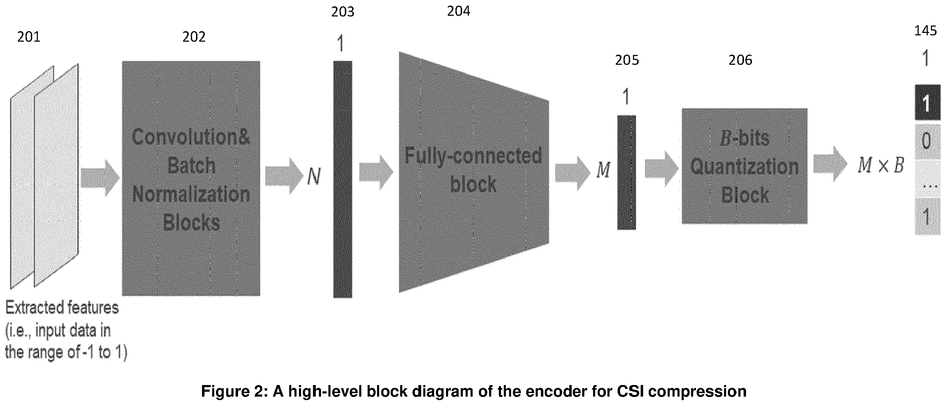

where $H_k \in \mathbb{C}^{N_r \times N_t}$, $x_k \in \mathbb{C}^{N_t \times 1}$, and $n_k \in \mathbb{C}^{N_r \times 1}$ are, respectively, MIMO channel matrix in the frequency domain, transmit data symbol, and AWGN sample for $k = 1,2, ... , N_{PRB}$. The UE 101 outputs CSI feedback bits 145 to the gNB 106 for the precoder selection. In the autoencoder (AE) 100 based method, the UE 101 calculates $w_k \in \mathbb{C}^{N_t \times 1}$, which is the most dominant eigenvector of the matrix $H_k^H H_k$ for all $k$ during the feature extraction stage and inputs them to the encoder 144, as shown in in Figure 2. Both the encoder 144 and decoder 146 include a convolution 202, 302, batch normalization 202, 302, and fully connected blocks 204, 304.

As shown in Figure 2, at block 201, on the UE 101 side, extracted features from the CSI 141 (i.e., Re(CSI) 142 and Im(CSI) 143) are inputted to the previously trained encoder 144 for compression. The total real number of encoder input is N, where $N$ is equal to $2 \times N_t \times N_{PRB}$. At block 204 the encoder reduces $N$ to $M$ 205 via fully-connected block 204 and $M$ is the dimension of the compressed channel data. At block 206, the encoder 144 performs quantization operation. Accordingly, the encoder 144, via the operation illustrated in FIG. 2, compresses $N$ real numbers to $M \times B$ bits, where M is the dimension of the compressed channel data, and $B$ is the number of bits for quantization.

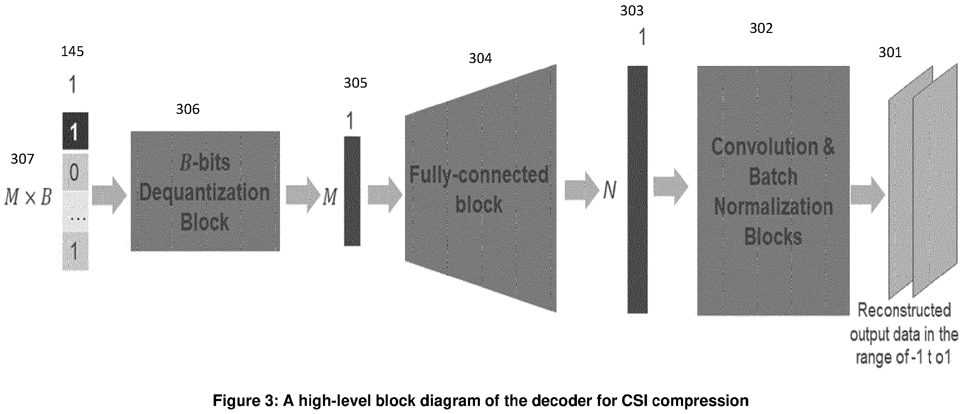

Afterward, the compressed CSI is input as feedback 145 to CSI reconstruction module 150 at the gNB 106. A reverse operation is performed on the gNB 106 side through a previously trained decoder 146 in order to output (i.e., Re(CSI) 142 and Im(CSI) 143) and obtain the reconstructed CSI 149, as shown in more detail Figure 3.

As shown in in Figure 3, the encoder 144 inputs the compressed $M \times B$ bits 145 to decoder 146. At block 306, the decoder 146 performs dequantization and provides (1xM) real numbers 305 to the fully connected block 304. The data dimension becomes (1xN) at the output of the fully-connected blocks 304 and N real numbers 303 are passed to the convolution and batch normalization blocks 302 to obtain reconstructed ĈSI 149.

**Part 2: AI/ML Model Evaluation**

To verify the advantages of the AI/ML model-based CSI compression, the performance of the autoencoder 100 can be assessed in terms of CSI reconstruction accuracy in a first stage of the evaluation. Afterward, the throughput performance of the system with the autoencoder-based precoder is assessed through a link-level simulator (LLS) in a second stage of the evaluation.

**2.1 Evaluation Methodology and Assumptions**

Statistical models from 3GPP TR 38.901 are used for the dataset construction. The dataset is employed to represent an ample space of MIMO channels with different parameters to make the autoencoder 100 perform well under various channel conditions and scenarios. For the initial evaluation, the parameters that are listed in Table 1 are utilized during the dataset construction.

*Table 1: Dataset generation parameters*

| Parameter | Value |
| --- | --- |
| Channel Model | CDL-B |
| Delay Spread | 100 ns |
| UE Speed | 3 kmph |
| #Transmit Antennas ($N_t$) | 32 |
| #Receive Antennas ($N_r$) | 1 |
| Operational Freq. ($f_c$) | 3.8 GHz |
| Subcarrier Spacing ($\Delta f$) | 15 kHz |
| Bandwidth (#RBs) | 27 |
| #Drops | 10000 |

Once the dataset is constructed, it is partitioned as follows: 70% of the dataset samples are utilized for AI/ML model 141 and autoencoder 100 training, another 20% are used for validation, and the remaining 10% is allocated for testing to prevent overfitting the AI/ML model 141.

Upon the completion of the AI/ML model 141 training, the system can be evaluated. In the first stage of the performance evaluation (i.e., intermediate performance evaluation), a CSI reconstruction accuracy is assessed, as detailed below in section 2.2 of the present disclosure. The intermediate KPIs for CSI reconstruction accuracy are discussed, along with the number of training parameters that reveals the trade-off between the computational complexity and the CSI reconstruction accuracy in this part.

Afterward, the throughput performance of the system is assessed through a link-level simulator (LLS) in the second stage of the evaluation (i.e., final performance evaluation), as detailed below in 2.3 of the present disclosure. The AI/ML-based based precoder's 144 performance is compared with the performance of the 5G NR Type I-based precoder. The LLS parameters that are used in this stage are listed in Table 2.

*Table 2: LLS Parameters*

| Parameter | Value |
|---|---|
| Channel Model | CDL-B |
| Delay Spread | 100 ns |
| UE Speed | 3 kmph |
| #Transmit Antennas ($N_t$) | 32 |
| #Receive Antennas ($N_r$) | 1 |
| Operational Freq. ($f_c$) | 3.8 GHz |
| Subcarrier Spacing ($\Delta f$) | 15 kHz |
| Bandwidth (#RBs) | 56 |
| FFT Size | 1024 |
| Sampling Rate | 30.72 Msps |
| # Realizations | 1000 |

For both stages of the performance evaluation, post-equalization SINR calculations are made considering an MMSE equalizer. The MMSE equalization is performed by applying the following MMSE matrix to the received signal on the UE 101 side:

$$U = (H^H H + \sigma^2 I)^{-1} H^H$$

Accordingly, the post-equalization SINR for the $i^{th}$ layer can be calculated as follows:

$$SINR_i = \frac{\beta_i}{1-\beta_i},$$

where $\beta_i = real\{UH\}$

## 2.2 Intermediate Performance Evaluation: CSI Reconstruction Accuracy

The performance of the reconstructed CSI at the gNB side 106 of the autoencoder 100 is compared with the ground-truth CSI in this section. The intermediate KPI options are intermediate KPIs are normalized mean square error (NMSE) are generalized cosine similarity (GCS) along with their variations, such as squared GCS (SGCS).

The ground-truth channel at the gNB 106 is denoted as $H \in \mathbb{C}^{N_r \times N_t}$ and the reconstructed channel through the autoencoder 100 is represented by $\widetilde{H} \in \mathbb{C}^{N_r \times N_t}$ . Considering the channel rank is 1, the precoder vectors are the most dominant eigenvectors of the $H^H H$ and $\widetilde{H}^H \widetilde{H}$, and they are denoted with w and $\tilde{w}$ respectively (w and $\widetilde{w} \in \mathbb{C}^{N_t \times 1}$ ). The GCS of these two vectors can be calculated as follows:

$$GCS = \frac{||\widetilde{w}^H w||}{||\widetilde{w}|| \, ||w||}$$

The GCS can be calculated for different granularities such as subcarrier level or subband level. Depending on the granularity level, the GCS can be averaged accordingly. Furthermore, when the channel rank is over 1, the most dominant eigenvectors are selected with respect to the channel rank. Afterward, the GCS of individual ranks can be averaged (with or without equal weight) as a single/combined intermediate KPI. Alternatively, the GCS values of respective ranks can be reported separately. Similarly, the GCS can be squared, and the SGCS can be used as an intermediate KPI by considering different granularities or number of ranks, as discussed before.

Another intermediate KPI is NMSE. Considering L samples, NMSE can be calculated as follows:

$$NMSE = \frac{1}{L} \sum_{l=1}^{L} \frac{||\widetilde{w}_l - w_l||^2}{||w_l||^2}$$

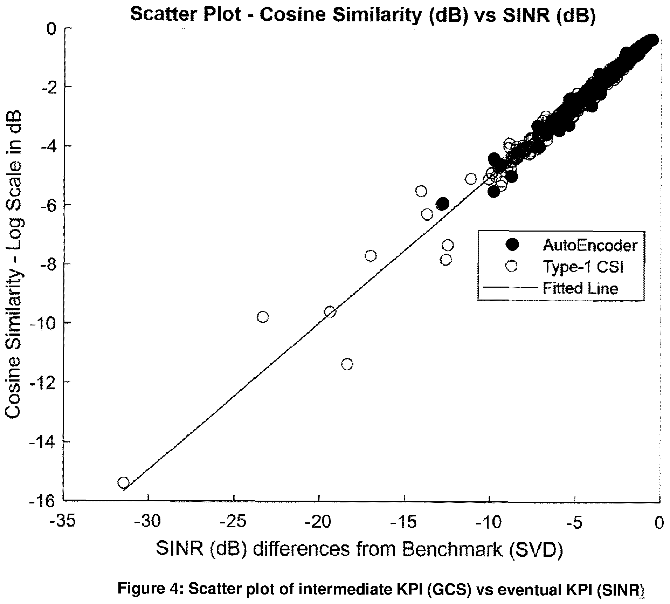

A good intermediate KPI metric reflects the eventual KPI metric successfully. Therefore, (post-processing) SINR correlation of the intermediate KPI metric, GCS, is calculated. The relationship between GCS, which compares w and $\tilde{w}$, and corresponding post-equalization SINR difference can be visually inspected in Figure 4, which shows scatter plot of intermediate KPI (GCS) vs eventual KPI (SINR) with a correlation of 0.99 -- indicating that a better CSI reconstruction accuracy leads to a higher SINR and throughput performance.

The relationship between the number of AI/ML model training parameters and generalized cosine similarity is also investigated. Table 3 displays the trade-off between complexity (through the number of training parameters) and CSI reconstruction accuracy (through GCS). As the number of AI/ML training parameters increases, a better cosine similarity performance is obtained. In other words, as computational complexity increases, the CSI reconstruction accuracy improves.

*Table 3: The relationship between the #AI/ML model training parameters and GCS*

| Number of AI/ML model training parameters | N (i.e., AE Input) | MxB (i.e., AE Output) | GCS |
|---|---|---|---|
| 752492 | | | 0.7339 |
| 379136 | 1728 | 216 | 0.6643 |
| 254684 | | | 0.5994 |
| 192458 | | | 0.4996 |

**2.3 Final Performance Evaluation: SINR and Throughput**

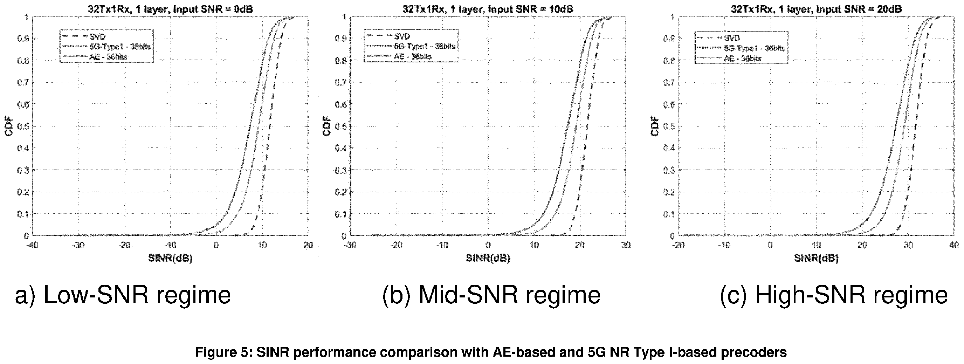

Considering a system with an AE-based precoder as described herein and another system with a 5G NR Type I-based precoder (with the same number of feedback bits for a fair comparison), the post-equalization SINR performances are evaluated and compared with the ideal SVD through an LLS. The system with the AE-based precoder performs better, as shown in Figure 5.

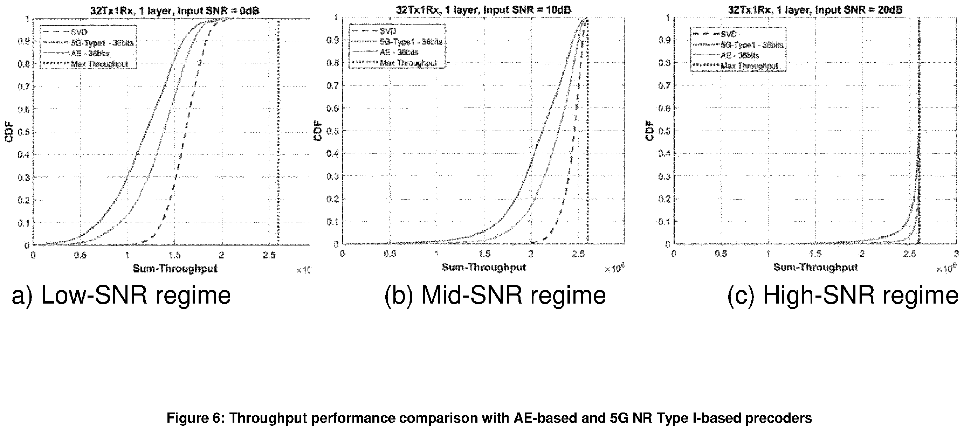

According to a higher post-equalization SINR, the system with the AE-based precoder obtains a higher throughput compared to the system with the 5G NR Type I-based precoder in all SNR regimes, as shown in Figure 6. Furthermore, the performance gap is more significant for the low SNR regime and the gap shrinks as SNR increases.

**Part 3: AI/ML Parameters that are exchanged between the UE and gNB**

Considering diverse requirements and capabilities, different autoencoder 100 structures can be selected. The selected autoencoder 100 structure can be exchanged between the UE 101 and gNB 106.

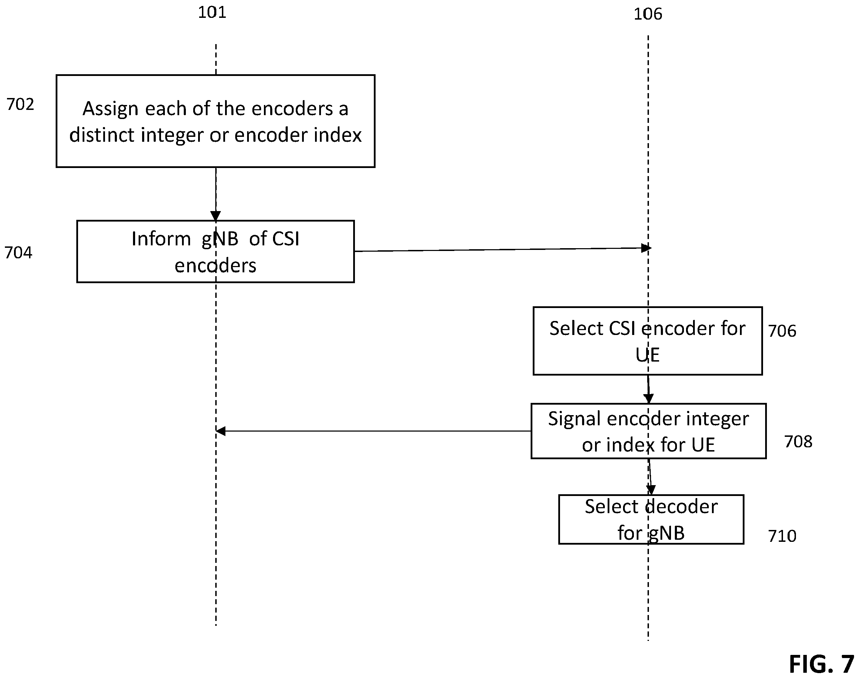

Figure 7 shows a system flow for an exchange between the UE 101 and gNB 106 to select an autoencoder 100. A UE 101 can use at least one CSI encoder 141 of multiple CSI 141 encoders 144 for the CSI feedback 145 purpose. To inform the UE 101 capability to the gNB 106, the UE 101 reports information on multiple CSI encoders 144 to the gNB 106. At block 702, each of these multiple CSI encoders 144 is assigned with a distinct integer or an encoder index.

At block 704, for each UE CSI encoder 144, the UE 101 sends information on the encoder input parameters, the encoder output parameters, and the corresponding performance parameters to the gNB 106.

At block 706 among the multiple CSI encoders 144 informed by the UE 101, the gNB 106 selects an encoder 144. At block 708 the gNB configures the UE 101 to use the selected encoder 144 by signaling the corresponding encoder index. Also, at block 710, the gNB 106 selects a decoder 146 corresponding to the selected encoder 144. The gNB 106 decoder 146 input dimension is aligned with the encoder 144 output dimension, which is inferred by the information on the UE 101 encoder 144 input parameters. The gNB decoder 146 output dimension is also aligned with the encoder input dimension, which is inferred by the information on the UE encoder 144 output parameters.

A UE 101 encoder 144 input comprises $N = 2 \times N_t \times N_{PRB}$ number of real numbers. In some embodiments, the parameter, $N_t$, represents the number of transmit antenna ports, and it is further broken down as $N_t = 2 \times N_1 \times N_2$. The parameter $N_1$ is the number of antenna ports in a first (e.g., horizontal or vertical) direction, whereas the parameter $N_2$ is the number of antenna ports in a second (e.g., vertical or horizontal direction). The scaler, 2, in $N_t$ corresponds to the number of antenna polarizations. In some embodiments, $N_t$ is equal to the number of CSI-RS ports. The other parameter, $N_{PRB}$, shows the total number of PRBs corresponding to the bandwidth of the operating bandwidth part (BWP).

The UE 101 can send information on the encoder input parameters of each UE 101 encoder 144 in multiple ways. In one embodiment, UE 101 informs the gNB 106 the values of $N_1$, $N_2$, and $N_{PRB}$ separately. In another embodiment, UE 101 informs $N_t$ and $N_{PRB}$.

Based on these values, the gNB 106 infers that the UE 101 encoder input dimension is $N = 2 \times N_t \times N_{PRB}$, and determines the gNB 106 decoder 146 output dimension corresponding to the UE 101 encoder 144 to be $N$ real numbers.

The encoder 144 compresses the $N$ real numbers into $M \times B$ (bits), where $M$ is the dimension of the compressed channel data (i.e., the number of quantized symbols), and $B$ is the number of bits per quantized symbol. The UE 101 can send information on the encoder 144 output parameters in multiple ways. In one embodiment, the UE 101 sends gNB 106 values of $M$ and $B$ separately. In another embodiment, the UE 101 sends gNB 106 certain variables derived from $M$ and $B$. For example, the compression ratio (i.e., $N/M$) can be sent along with $B$, or the total number of feedback bits 145 can be reported (i.e., $M \times B$) along with either $M$ or $B$. This information on the encoder input and output parameters is employed to make the decoder 146 work on the gNB 106 side. The autoencoder 100 works properly when the decoder 146 input-encoder 144 output and decoder 146 output-encoder 144 input dimensions are aligned.

Based on these values, the gNB 106 infers that the UE 101 encoder output 145 is $M \times B$ bits and determines the gNB decoder 146 input dimension corresponding to the UE encoder 144 to be $M$ quantized symbols, wherein each of these M symbols is represented by $B$ bits.

The selected encoder input and output parameters (such as $N$, $M$, and $B$) correspond to specific performance in terms of computational complexity/power consumption and CSI reconstruction accuracy. The UE 101 can send information on the performance parameters in multiple ways. In one embodiment, UE sends gNB 106 information on a number of weights used for the encoder 144 neural network, which is a measure of computational complexity, and information on GCS, which is a measure of CSI reconstruction accuracy. The number of weights depends on the specific encoder 144 architecture at the UE 101 side, such as the number of convolutional layers and kernel size. One benefit of sending the number of weights is the UE 101 does not need to reveal the actual neural network implementation to the gNB 106 side with this computational complexity performance parameter. Also, the CSI reconstruction accuracy can be sent using other KPI metrics such as NMSE or SGCS, as described in 2.2. Furthermore, these performance parameters can be quantized for more effective signaling.

An example list of exchanged parameters, which the UE 101 sends to the gNB 106, is provided in Table 4. The values in this table depend on the extracted features as well.

| Encoder Input Parameters | | | | Encoder Output Parameters | | | Performance Parameters | | Encoder Index |
|---|---|---|---|---|---|---|---|---|---|
| Total Encoder Input ($N$) = $2 \times N_t \times N_{PRB}$ = $4 \times N_1 \times N_2 \times N_{PRB}$ | $N_1$ | $N_2$ | $N_{PRB}$ | Total feedback bits = $M \times B$ | $M$ | $B$ | Number of AI/ML parameters | GCS | |
| 3584 | 2 | 8 | 56 | 36 | 36 | 1 | 265748 | 0.635 | 0 |
| | | | | | 18 | 2 | 136706 | 0.545 | 1 |
| | | | | | 12 | 3 | 93692 | 0.518 | 2 |
| | | | | | 9 | 4 | 72185 | 0.481 | 3 |
| | | | | 72 | 72 | 1 | 523832 | 0.729 | 4 |
| | | | | | 36 | 2 | 265748 | 0.657 | 5 |
| | | | | | 24 | 3 | 179720 | 0.639 | 6 |
| | | | | | 18 | 4 | 136706 | 0.603 | 7 |
| | | | | 108 | 108 | 1 | 781916 | 0.791 | 8 |
| | | | | | 54 | 2 | 394790 | 0.725 | 9 |
| | | | | | 36 | 3 | 265748 | 0.701 | 10 |
| | | | | | 27 | 4 | 201227 | 0.681 | 11 |

For example, the parameters in this table are given considering the most dominant eigenvectors of the channel matrix in the frequency domain as extracted features. However, the values differ when the features are extracted from the channel matrix in the angular-delay domain. Therefore, the UE 101 may send information on the feature extraction type as well.

Table 4: Exchanged parameters between UE and gNB

*References:*

[1] RP-213599, "New SI: Study on Artificial Intelligence (AI)/Machine Learning (ML) for NR Air Interface", Work Item Description.

[2] C. Wen, W. Shih and S. Jin, "Deep Learning for Massive MIMO CSI Feedback," in IEEE Wireless Communications Letters, vol. 7, no. 5, pp. 748-751, Oct. 2018, doi: 10.1109/LWC.2018.2818160.

It will be understood that implementations and embodiments can be implemented by computer program instructions. These program instructions can be provided to a processor to produce a machine, such that the instructions, which execute on the processor, create means for implementing the actions specified herein. The computer program instructions can be executed by a processor to cause a series of operational steps to be performed by the processor to produce a computer-implemented process such that the instructions, which execute on the processor to provide steps for implementing the actions specified. Moreover, some of the steps can also be performed across more than one processor, such as might arise in a multi-processor computer system or even a group of multiple computer systems. In addition, one or more blocks or combinations of blocks in the flowchart illustration can also be performed concurrently with other blocks or combinations of blocks, or even in a different sequence than illustrated without departing from the scope or spirit of the invention.

**Claims**

**1.**   A method comprising:

configuring a UE to report information on a plurality of CSI encoders to a gNB for CSI feedback;
assigning each of the plurality of CSI encoders with a distinct integer or an encoder index; and
configuring the gNB to

select a CSI encoder reported by the UE and configure the UE to use the selected CSI encoder by signaling the encoder index or distanced integer assigned to the selected CSI encoder; and
select a decoder corresponding to the selected CSI encoder.

2. The method of claim 1, comprising:
configuring the UE to report to the gNB, for each one of the plurality of CSI encoders, information on: input parameters of the CSI encoder, output parameters of the CSI encoder, and corresponding performance parameters.

3. The method of claim 2, wherein

wherein UE CSI encoder input comprises $N = 2 \times N_t \times N_{PRB}$ number of real numbers,
a parameter $N_t$ being a number of transmit antenna ports, and
a parameter $N_{PRB}$ being a total number of PRBs corresponding to the bandwidth of an operating bandwidth part (BWP).

4. The method of claim 3, wherein $N_t = 2 \times N_1 \times N_2$,

a parameter $N_1$ being a number of antenna ports in a first direction,
a parameter $N_2$ is a number of antenna ports in a second direction, and,
a scaler 2 in $N_t$ corresponds to a number of antenna polarizations.

5. The method of claim 3 wherein $N_t$ is equal to a number of CSI-RS ports.

6. The method of claim 3, further comprising:

configuring the encoder to compress the $N$ real numbers into $M \times B$ (bits);
$M$ being a number of quantized symbols for a dimension of a compressed channel data; and
$B$ being a number of bits per quantized symbol.

7. The method of claim 6, further comprising:
configuring the UE to send information on the encoder output parameters by at least one of:

sending values of $M$ and $B$ to the gNB separately;
sending the gNB variables derived from $M$ and $B$;
or both.

8. The method of claim 7, wherein the variables derived from M and $B$ comprises a compression ratio ($N/M$) sent along with $B$.

9. The method of claim 7, wherein the variables derived from M and B comprises a total number of feedback bits ($M \times B$) reported along with either $M$ or $B$.

10. The method of claim 6 wherein the gNB is configured to infer that the UE encoder output is $M \times B$ bits, and determine that the gNB decoder input dimension corresponding to the UE encoder is $M$ quantized symbols, wherein each of the M symbols is represented by $B$ bits.

11. The method of claim 6 wherein the encoder input parameters and the encoder output parameters correspond to specific performance for: computational complexity and power consumption, and CSI reconstruction accuracy.

12. The method of claim 11 wherein the UE sends gNB information on a number of weights used for an encoder neural network as a measure of the computational complexity and power consumption, and information on the GCS as a measure of CSI reconstruction accuracy.

13. The method of claim 12, wherein the number of weights depends on a CSI UE encoder architecture.

14. The method of claim 13 wherein the encoder architecture for determining the number of weights comprises a number of convolutional layers, a kernel size, or both.

15. The method of claim 3 wherein the gNB is configured to infer that the UE encoder input dimension is $N = 2 \times N_t \times N_{PRB}$, and determine the gNB decoder output dimension corresponding to the UE encoder is $N$ real numbers.

16. An autoencoder, comprising:

a CSI encoder for a UE, the CSI encoder being selected by a gNB from a plurality of CSI encoders, wherein the UE is configured to at least:

report information on the plurality of CSI encoders to a gNB for CSI feedback; and
assign each of the plurality of CSI encoders with a distinct integer or an encoder index; and

a decoder for a gNB corresponding to the selected CSI encoder, wherein the gNB is configured to at least:

select the CSI encoder reported by the UE and configure the UE to use the selected CSI encoder by signaling the encoder index or distanced integer assigned to the selected CSI encoder and
select the decoder corresponding to the selected CSI encoder.

17. The autoencoder of claim 16, comprising:
the UE configured to report to the gNB, for each one of the plurality of CSI encoders, information on: input parameters of the CSI encoder, output parameters of the CSI encoder, and corresponding performance parameters;

wherein a UE CSI encoder input parameters comprise $N = 2 \times N_t \times N_{PRB}$ number of real numbers,
a parameter $N_t$ being a number of transmit antenna ports, and
a parameter $N_{PRB}$ being a total number of PRBs corresponding to the bandwidth of an operating bandwidth part (BWP).

18. The autoencoder of claim 17, further comprising:

the encoder being configured to compress the $N$ real numbers into $M \times B$ (bits);
$M$ being a number of quantized symbols for a dimension of a compressed channel data; and
$B$ being a number of bits per quantized symbol.

19. The autoencoder of claim 18 wherein the gNB is configured to infer that the UE encoder output is $M \times B$ bits, and determine that the gNB decoder input dimension corresponding to the UE encoder is $M$ quantized symbols, wherein each of the M symbols is represented by $B$ bits.

20. The autoencoder of claim 17 wherein the gNB is configured to infer that the UE encoder input dimension is $N = 2 \times N_t \times N_{PRB}$, and determine the gNB decoder output dimension corresponding to the UE encoder is $N$ real numbers.

Figure 1: A high-level block diagram of the auto-encoder for CSI compression

**Figure 2: A high-level block diagram of the encoder for CSI compression**

Figure 3: A high-level block diagram of the decoder for CSI compression

**Figure 4: Scatter plot of intermediate KPI (GCS) vs eventual KPI (SINR)**

a) Low-SNR regime     (b) Mid-SNR regime     (c) High-SNR regime

Figure 5: SINR performance comparison with AE-based and 5G NR Type I-based precoders

EP 4 336 756 A1

a) Low-SNR regime  (b) Mid-SNR regime  (c) High-SNR regime

Figure 6: Throughput performance comparison with AE-based and 5G NR Type I-based precoders

EP 4 336 756 A1

702 — Assign each of the encoders a distinct integer or encoder index

704 — Inform gNB of CSI encoders

706 — Select CSI encoder for UE

708 — Signal encoder integer or index for UE

710 — Select decoder for gNB

101

106

**FIG. 7**

## 10

NR UE (101)

Circuitry (102)

Uu Interface (120)

NR gNB (106)

Circuitry (107)

Programmable Circuit
(102A)

Processor (103)

Memory (104)

Module (105)

Programmable Circuit
(107A)

Processor (108)

Memory (109)

Module (110)

Storage Device
(130)

FIG. 8

EP 4 336 756 A1

Europäisches Patentamt
European Patent Office
Office européen des brevets

**EUROPEAN SEARCH REPORT**

Application Number

EP 23 19 2909

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NEC: "Discussion on AI/ML for CSI feedback enhancement", 3GPP DRAFT; R1-2203939, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20220509 – 20220520 29 April 2022 (2022-04-29), XP052153273, Retrieved from the Internet: URL:https://ftp.3gpp.org/tsg_ran/WG1_RL1/T SGR1_109-e/Docs/R1-2203939.zip [retrieved on 2022-04-29] | 1-11, 15-20 | INV. H04L1/00 H04B7/0456 H04B7/06 ADD. G06N3/0455 G06N3/08 |
| A | * the whole document * | 12-14 | |
| X | US 2021/273707 A1 (YOO TAESANG [US] ET AL) 2 September 2021 (2021-09-02) | 1,16 | |
| A | * paragraph [0065] – paragraph [0096] * * figures 4-8 * | 2-15, 17-20 | |
| | | | TECHNICAL FIELDS SEARCHED (IPC) |
| X | MAVENIR: "Views on Evaluation of AI/ML for CSI Feedback Enhancement", 3GPP DRAFT; R1-2207081, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Electronic meeting ;20220822 – 20220826 12 August 2022 (2022-08-12), XP052275018, Retrieved from the Internet: URL:https://ftp.3gpp.org/tsg_ran/WG1_RL1/T SGR1_110/Docs/R1-2207081.zip [retrieved on 2022-08-12] | 16-20 | H04L H04B G06N |
| A | * the whole document * | 1-15 | |

-/--

The present search report has been drawn up for all claims

| Place of search | Date of completion of the search | Examiner |
|---|---|---|
| Munich | 2 February 2024 | Gardella, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                             

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

**EP 23 19 2909**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/149904 A1 (TIMO ROY [SE] ET AL) 12 May 2022 (2022-05-12) | 16-20 | |
| A | * the whole document * | 1-15 | |

TECHNICAL FIELDS SEARCHED (IPC)

The present search report has been drawn up for all claims

| Place of search | Date of completion of the search | Examiner |
|---|---|---|
| Munich | 2 February 2024 | Gardella, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 2909

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2024

| Patent document cited in search report | | Publication date | Patent family member(s) | | Publication date |
|---|---|---|---|---|---|
| US 2021273707 | A1 | 02-09-2021 | CN | 115136505 A | 30-09-2022 |
| | | | EP | 4111599 A1 | 04-01-2023 |
| | | | US | 2021273707 A1 | 02-09-2021 |
| | | | WO | 2021173331 A1 | 02-09-2021 |
| US 2022149904 | A1 | 12-05-2022 | EP | 3935742 A1 | 12-01-2022 |
| | | | US | 2022149904 A1 | 12-05-2022 |
| | | | US | 2022376749 A1 | 24-11-2022 |
| | | | WO | 2020180221 A1 | 10-09-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Study on channel model for frequencies from 0.5 to 100 GHz. *3GPP TR 38.901,* 31 March 2022
- New SI: Study on Artificial Intelligence (AI)/Machine Learning (ML) for NR Air Interface. *RP-213599*

- **C. WEN ; W. SHIH ; S. JIN.** Deep Learning for Massive MIMO CSI Feedback. *IEEE Wireless Communications Letters,* October 2018, vol. 7 (5), 748-751